# EUROPÄISCHE PATENTSCHRIFT

(11) **EP 1 610 031 B1**
(45) Veröffentlichungstag und Bekanntmachung des Hinweises auf die Patenterteilung: **15.10.2008**
(21) Anmeldenummer: 05012314.0
(22) Anmeldetag: 08.06.2005
(51) Int. Cl.: F16H 1/14, F16H 57/02

(54) **Stirnradgetriebe**
Spur gear transmission
Transmission à engrenages droits

(30) Priorität: 22.06.2004 DE 102004030180
(43) Veröffentlichungstag der Anmeldung: 28.12.2005
(73) Patentinhaber: A. FRIEDR. FLENDER AG, 46395 Bocholt (DE)
(72) Erfinder: Kant, Aarnout, 7091 Dinxperlo (NL); Thuilot, Jürgen, 46397 Bocholt (DE); Pessel, Hubert, 7091 Dinxperlo (NL)
(74) Vertreter: Radünz, Ingo

(56) Entgegenhaltungen:
- BE-A- 527 697
- DE-C- 858 920
- GB-A- 294 717
- GB-A- 1 090 342

## Beschreibung

Die Erfindung betrifft ein Stirnradgetriebe, insbesondere ein Kegelstirnradgetriebe mit den Merkmalen des Oberbegriffs des Anspruches 1.

Getriebe mit einer Kegelradstufe sind eine allgemein bekannte Konstruktionslösung, um neben den wichtigen mechanischen Größen von Drehzahl und Drehmoment auch die räumliche Lage zwischen der Antriebs- und Abtriebswelle zu ändern. Üblicherweise liegen die Achsen von Antriebs- und Abtriebswelle um einen Winkel von 90° zueinander versetzt. Besonders wirtschaftlich ist die Verwendung des Kegelradsatzes als erste Stufe in einem meist mehrstufigen Getriebe. Insbesondere für Antriebe von Förderbandanlagen ermöglichen Kegelstirnradgetriebe die parallele Ausrichtung von Antrieb und Förderbandanlage.

Mit einem minimalen Umfang an Einzelteilen kann eine viele Baugrößen umfassende Universalgetriebebaureihe erzeugt werden. Die Einzelteile werden technisch in einem optimalen Arbeitspunkt ausgelegt. Aufgrund der hohen Wiederholhäufigkeit einzelner Teile in verschiedenen Varianten hat dieses Konzept zudem besondere wirtschaftliche Vorteile.

Es existiert für eine Vielzahl vergleichbarer Getriebereihen nach dem Baukastenprinzip ein Programm, das sowohl Stirnrad- als auch Kegelstirnradgetriebe umfasst. Die Getriebe sind für alle denkbaren Einbaulagen und mit unterschiedlichsten Bauformen der An- und Abtriebswellen verfügbar. Kennzeichnend ist die Verwendung eines weitgehend unveränderten Grundgehäuses sowohl für die Stirnrad- als auch für die Kegelstirnradgetriebe. Wahlweise sind auch weitere Zusatzkomponenten, wie z.B. Rücklaufsperren und Bremsen, erhältlich.

Aus dem vorhandenen Programm leiten sich für besondere Branchenschwerpunkte angepasste Produktprogramme ab, die die Vorteile der vorhandenen Universalbaureihe nutzen und sich gleichzeitig auf die Zusammenstellung der branchenüblichen Varianten beschränken. Für Förderbandantriebe werden im wesentlichen zwei- und dreistufige Kegelstirnradgetriebe eingesetzt. Für dreistufige Kegelstirnradgetriebe ist auch eine Sondervariante mit einer vergrößerten Oberfläche des Getriebegehäuses durch aufgesetzte Kühlrippen vorgesehen.

Nachteilig an dem Konzept eines universalen Baukastengetriebes ist für branchenspezifische Anwendungen die durchgängige Verwendung von Gleichteilen. Hier ist insbesondere das Getriebegehäuse zu nennen. Neben der mechanischen Belastung ist die Wärmegrenzleistung ein bestimmendes Auslegungskriterium für Förderbandantriebe. Da im allgemeinen in Tagebauen oder ähnlichen Anwendungsfällen zur Förderung von Schüttgütern kein Kühlwasser verfügbar ist und der Einsatz anderer Kühl- und Schmieranlagen, wie z. B. Öl-Luftkühler, aus unterschiedlichsten Gründen nicht möglich ist, muss die gesamte Getriebewärme an die Luft über Konvektion abgegeben werden. Zusätzlich erschweren die an dem betreffenden Einsatzort herrschenden rauen Umgebungsbedingungen mit einem hohen Staubanfall die Aufrechterhaltung der Wärmeabfuhr, da auf dem Getriebegehäuse abgelagerte Staubschichten isolierend wirken. Bekannt sind in diesem Zusammenhang Kegelstirnradgetriebe mit einer durch Kühlrippen vergrößerten Gehäuseoberfläche und mit einem auf der Antriebswelle angeordneten Axiallüfterrad.

Bei einem aus der gattungsgemâßen BE-A-527 697 bekannten Schneckengetriebe mit einem auf der Antriebswelle angeordneten Axiallüfterrad sind die Kühlrippen nur auf den Seitenwänden des Getriebegehäuses und im Bereich der Schnecke aufgebracht. Der Laternenflansch ist mit dem Getriebegehäuse verschraubt und mit nicht näher beschriebenen Durchtrittsöffnungen für die Kühlluft versehen. Die von dem Axiallüfterrad angesaugte Kühlluft strömt durch diese Durchtrittsöffnungen weitgehend ungenutzt an dem Getriebegehäuse vorbei.

Der Erfindung liegt die Aufgabe zugrunde, das gattungsgemäße Kegelstirnradgetriebe für den Einsatz als Förderbandantriebe derart zu ändern, dass unter gezielter Optimierung der Gehäuseform die mittels Konvektion abgeführte Wärmemenge dauerhaft erhöht werden kann.

Die zugrundeliegende Aufgabe wird bei einem gattungsgemäßen Stirnradgetriebe erfindungsgemäß durch die kennzeichnenden Merkmale des Anspruchs 1 gelöst. Vorteilhafte Ausgestaltungen der Erfindung sind Gegenstand der Unteransprüche.

Die Erfindung und die mit der Erfindung verbundenen Vorteile werden nachfolgend anhand von zwei in der Zeichnung dargestellten Ausführungsbeispielen näher erläutert. Es zeigen:
- Fig. 1: die Seitenansicht auf ein Kegelstirnradgetriebe eines Ausführungsbeispiels nach der Erfindung;
- Fig. 2: eine räumliche Ansicht auf die seite der Antriebswelle des Kegelstirnradgetriebes gemäß Fig. 1 und
- Fig. 3: den Aufbau eines typischen Förderbandantriebs in Seitenansicht und teilweise als Längsschnitt eines weiteren Ausführungsbeispiels nach der Erfindung.

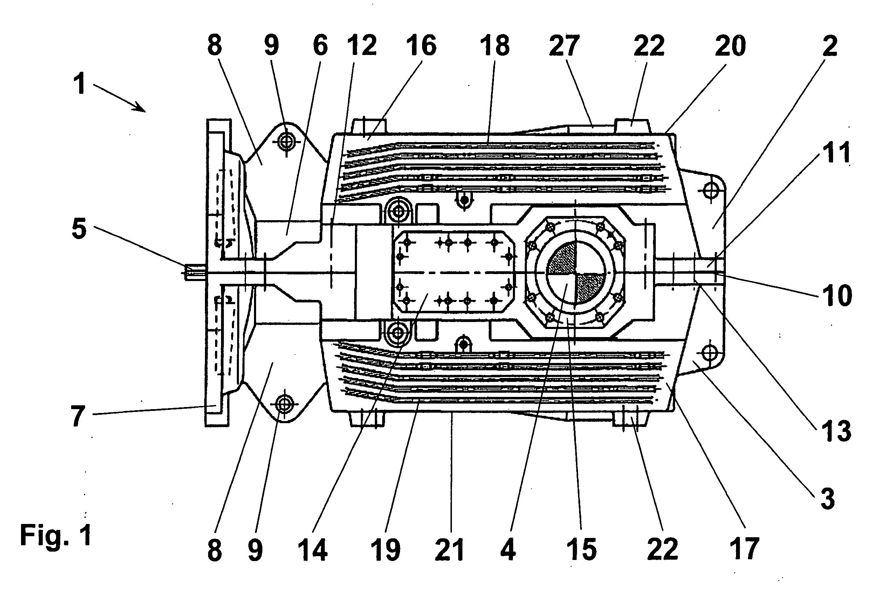

In Fig. 1 ist ein als Kegelstirnradgetriebe 1 ausgebildetes Stirnradgetriebe dargestellt. Das Kegelstirnradgetriebe 1 weist ein Gehäuseoberteil 2 und ein Gehäuseunterteil 3 auf, die symmetrisch aufgebaut sind und in der gleichen Modellform abgegossen werden können. Die Abstützung des Antriebs erfolgt in dem gezeigten Ausführungsbeispiel über die Anbindung der Abtriebswelle 4 an eine nicht gezeigte Anlage, die vorzugsweise eine Förderbandanlage zur Förderung von Schüttgut ist. Die Abtriebswelle 4 ist als Vollwelle ausgebildet und wird über eine hier nicht dargestellte Flanschkupplung mit einer Arbeitsmaschine der Anlage verbunden. Alternativ lässt sich bei Verwendung einer Hohlwelle der Antrieb als Aufsteckausführung ausbilden. Die Antriebsleistung gelangt von einem nicht dargestellten Antriebsmotor über eine Antriebswelle 5 in das Getriebe.

Die Antriebswelle 5 ist ein Teil der Kegelradstufe des Getriebes. Aufgrund der geringeren mechanischen Belastung in der ersten Getriebestufe wird die in den Herstellkosten relativ teure Kegelradverzahnung an der Eingangsseite angebracht. Die Antriebswelle 5 ragt stirnseitig aus dem Getriebegehäuse heraus und stützt sich in einem mit dem Getriebegehäuse verbundenen Gehäusehals 6 ab. In Richtung des Welleneingangs befindet sich an dem Gehäusehals 6 ein später näher beschriebener Laternenflansch 7 zum Anschluss einer Motorlaterne. In einer vertikalen Ebene sind an der Ober- und Unterseite des Gehäusehalses 6 Versteifungsrippen 8 befestigt, die mit Anlenkpunkten 9 zur Anbindung einer gelenkigen Drehmomentenstütze versehen sind.

Beiderseits einer horizontalen Teilfuge 10 sind an dem Gehäuseoberteil 2 und dem Gehäuseunterteil 3 umlaufende Gehäusekragen 11, 12 angebracht. Die Gehäusekragen 11, 12 bilden flanschartige Vorsprünge, die der Aufnahme von Gehäuseschrauben 13 dienen, mit denen das Gehäuseoberteil 2 und das Gehäuseunterteil 3 miteinander verschraubt werden.

In den Seitenflächen 16, 17 des Gehäuseoberteils 2 und des Gehäuseunterteils 3 befinden sich Naben zur Aufnahme der Wellen der Getriebestufen und der Abtriebswelle. Diese Naben ragen ebenso wie die Gehäusekragen 11, 12 aus den Seitenflächen 16, 17 hervor und bieten weiteren Gehäuseschrauben zwischen den Getriebestufen den erforderlichen Bauraum. Die Naben sind durch einen geschlossenen Gehäusedeckel 14 verschlossen, während die Nabe der Abtriebswelle 4 durch einen offenen Gehäusedeckel 15 abgedeckt ist.

Wahlweise kann der geschlossene Gehäusedeckel 14 durch einen offenen Gehäusedeckel ersetzt werden, um verlängerte Wellen der Zwischenstufen einsetzen zu können. Hieran lassen sich mögliche Zusatzaggregate, wie z.B. ein Hilfsantrieb, eine Rücklaufsperre oder ein Drehzahlwächter anschließen.

Auf den Seitenflächen 16, 17 des Gehäuseoberteiles 2 und des Gehäuseunterteiles 3 sind Kühlrippen 18, 19 angebracht, die sich parallel zueinander über die gesamte Länge des Getriebegehäuses erstrecken. Die Kühlrippen 18, 19 vergrößern die Gehäuseoberfläche und verbessern den Wärmeübergang von dem Getriebe an die Umgebung.

An den der Teilfuge 10 gegenüberliegenden Seiten ist das Gehäuseoberteil 2 durch eine Bodenfläche 20 und das Gehäuseunterteil 3 durch eine Bodenfläche 21 verschlossen. An den Bodenflächen 20, 21 sind Füße 22 vorgesehen, die bei der Fertigung als Richtfläche und bei dem Transport und der Montage als Gehäusefüße dienen. Für ein Getriebe in Fußausführung befinden sich an diesen Stellen die Aufnahmepunkte der Fundamentschrauben.

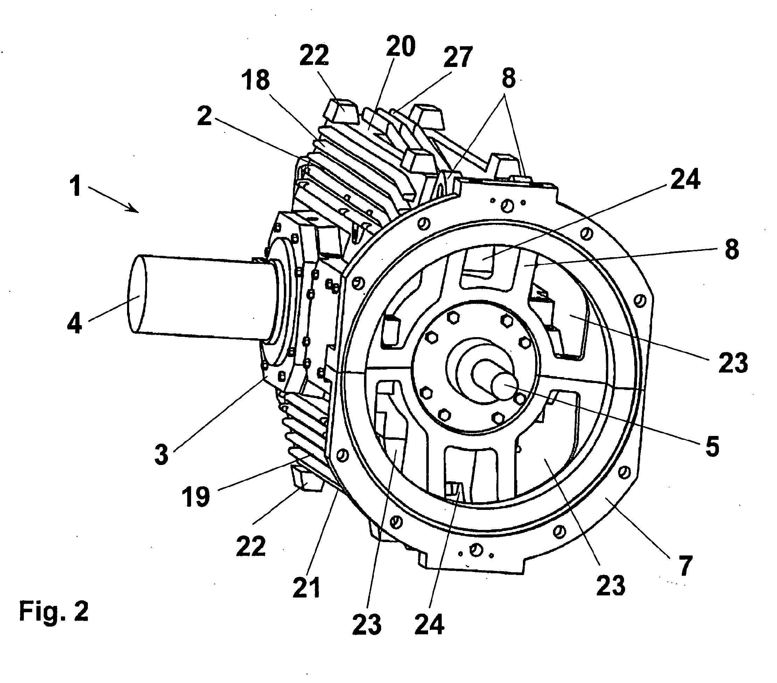

Die räumliche Darstellung des Kegelstirnradgetriebes 1 in Fig. 2 lässt die erfindungsgemäß verbesserte Luftstromführung deutlich erkennen.

Der Boden des Laternenflansches 7 ist mit seitlichen Öffnungen 23 und mittleren Öffnungen 24 versehen, die den Laternenflansch 7 beiderseits einer horizontalen Mittelebene in Längsrichtung des Getriebes durchdringen. Die seitlichen Öffnungen 23 liegen jeweils mit ihrer inneren Kante in der Verlängerung der Seitenflächen 16, 17 und die mittleren Öffnungen 24 liegen jeweils mit ihrer inneren Kante in der Verlängerung der Bodenflächen 20, 21 des Getriebegehäuses. Erst die verfahrenstechnische Beherrschung der Gießtechnik von aufwendigen Bauteilen mit höchst unterschiedlicher Materialverteilung in dieser erheblichen räumlichen Erstreckung erlaubt die direkte formschlüssige Verbindung des Laternenflansches 7 am Gehäusehals 6 des Kegelstirnradgetriebes 1. Durch das Anformen des Laternenflansches 7 an den Gehäusehals 6 bildet dieser zusammen mit dem Gehäuseoberteil 2 und dem Gehäuseunterteil 3 jeweils ein Stück und stellt damit einen Teil des Getriebegehäuses dar. Als Folge dieser vorteilhaften Gestaltung baut das Getriebe kürzer.

Durch die Öffnungen 23, 24 strömt die Luft aus der an den Laternenflansch angeschlossenen Motorlaterne an allen Seiten (Seitenflächen 16, 17, Bodenflächen 20, 21) des Kegelstirnradgetriebes 1 entlang. Um eine hinreichende Steifigkeit der Konstruktion des Laternenflansches 7 zu erreichen, sind zwischen den seitlichen Öffnungen 23 und der mittleren Öffnung 24 zwei Versteifungsrippen 8 angebracht. Die angebrachten Versteifungsrippen 8 bilden gleichzeitig einen Strömungskanal 25, der die Luft an den Bodenflächen 20 und 21 entlang leitet.

Vorteilhafterweise sind die obere Bodenfläche 20 und die untere Bodenfläche 21 in Richtung auf die mittleren Öffnungen 24 im Laternenflansch 7 abgeschrägt, wodurch Abschrägungen 26 entstehen, die die Fortsetzung des Strömungskanals 25 darstellen. Auf den Bodenflächen 20, 21 sind Kühlrippen 27 zur Verbesserung des Wärmeübergangs angebracht. Auch für den Fall, dass das Getriebe in Fußausführung direkt auf dem Boden steht, erlaubt die Abschrägung 26 die Luftführung unter dem Getriebe hindurch.

Ebenso wie durch die mittleren Öffnungen 24 strömt Luft durch die seitlichen Öffnungen 23 an den Kühlrippen 18, 19 der Seitenflächen 16, 17 entlang. Die Kühlrippen 18, 19 laufen durch eine leichte Abwinklung auf die seitlichen Öffnungen 23 des Laternenflansches 7 zu und sind dadurch in Richtung des Gehäusehalses 6 der Luftströmung angepasst. Der Luftstrom wird durch diese leichte Abwinkelung bis zum Ende der gesamten Seitenflächen 16, 17 des Getriebegehäuses geleitet.

Die kontinuierliche Luftstromführung ohne abrupte Sprünge oder Übergänge an allen Begrenzungs- oder Außenflächen (Seitenflächen 16, 17, Bodenflächen 20 , 21) führt zu einem deutlich verbesserten Wärmeübergang durch erzwungene Konvektion an die Luft der Umgebung. Außerdem verhindert der geführte Luftstrom, dass sich der immer vorhandene Staub in der Umgebungsluft auf dem Getriebegehäuse absetzt und isolierende Drecknester bildet.

Im Gegensatz zu dem erfindungsgemäßen Getriebegehäuse müssen die Gehäuseformen der bekannten Universalgetriebe für einen Förderbandantrieb auch die Anforderungen anderer Anwendungen berücksichtigen. Dieser Kompromiss führt zu einem schlechteren Wärmehaushalt, der in diesem Anwendungsfall zu einer unwirtschaftlichen Überdimensionierung des Antriebs führt.

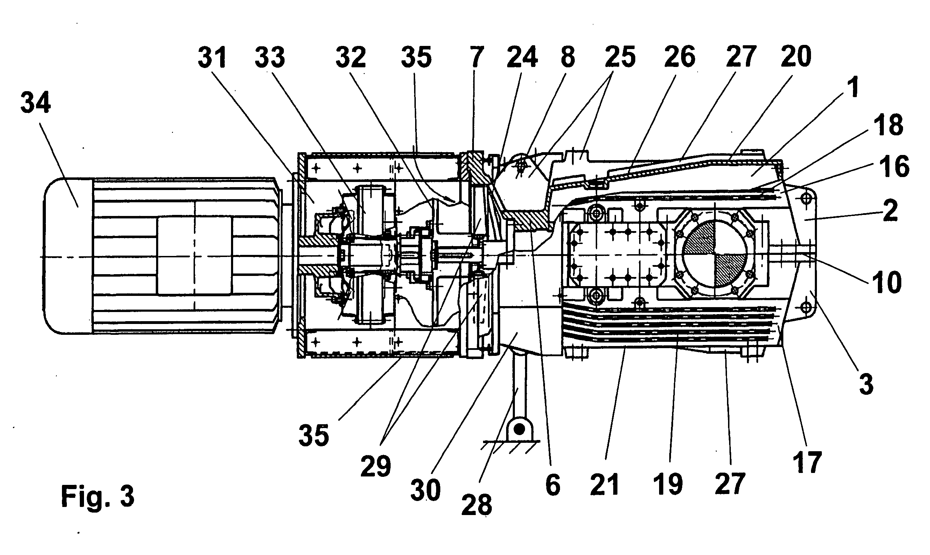

Die Darstellung des weiteren Ausführungsbeispiels in Fig. 3 zeigt den gesamten Antriebstrang eines Förderbandantriebs unter Verwendung eines Kegelstirnradgetriebes 1. Das Getriebegehäuse ist auf einem Fundament oder einem Maschinenrahmen über eine Drehmomentenstütze 28 abgestützt, die in den Anlenkpunkten 9 der Versteifungsrippen 8 angreift.

Die Antriebswelle 5 des Kegelstirnradgetriebes 1 ist über eine Bremse 32 und eine Flüssigkeitskupplung 33 mit der Abtriebswelle eines als Antrieb dienenden Elektromotors 34 verbunden. Der Elektromotor 34 ist über eine Motorlaterne 31 und den Laternenflansch 7 an das Getriebegehäuse angeflanscht. Die Motorlaterne 31 ist für den Anschluss des als Flanschmotor ausgebildeten Elektromotors 34 ausgelegt. Da die Motorlaterne 31 erhebliche Gewichtskräfte zu der Antriebslagerung an der Abtriebswelle 4 übertragen muss, ist auch hierbei durch den an den Gehäusehals 6 des Getriebegehäuse angegossenen Laternenflansch 7 eine verkürzte Verbindung von Getriebegehäuse und Elektromotor 34 eine vorteilhafte Konstruktionslösung.

Unmittelbar im Anschluss an den Laternenflansch 7 ist direkt auf der Antriebswelle 5 des Kegelstirnradgetriebes 1 ein Axiallüfterrad 29 drehfest befestigt. Die Motorlaterne 31 ist mit ausreichend großen Lufteinlassöffnungen 35 versehen. Aus Gründen der Betriebssicherheit sind diese Lufteinlassöffnungen 35 mit hier nicht dargestellten Bauteilen zum Eingriffsschutz bzw. staubabweisenden Hauben versehen. Das direkt auf der Antriebswelle 5 angebrachte Axiallüfterrad 29 dreht mit der hohen Motordrehzahl. Dadurch wird in jedem Betriebszustand die Förderung eines hohen Luftstroms gewährleistet. Dieser Luftstrom tritt durch die Öffnungen 23, 24 im Laternenflansch 7 hindurch und wird an den Kühlrippen 18, 19, 27 an den Seitenflächen 16, 17 und den Bodenflächen 20, 21 entlang geführt.

Die Wirkung der Luftströmung kann noch durch die Verwendung einer Luftleithaube 30 erhöht werden, die den Gehäusehals 6 im Anschluss an den Laternenflansch umgibt. Der Innendurchmesser der Luftleithaube 30 ist geringfügig größer als die radial größten Abmessungen der Öffnungen 23, 24 im Laternenflansch 7. Somit wird die gesamte Luftströmung in einem Ringkanal zwischen Gehäusehals 6 und Luftleithaube 30 direkt und verlustarm zu den wärmsten Stellen an den Seitenflächen 16, 17 und Bodenflächen 20, 21 geführt.

## Patentansprüche

1. Stirnradgetriebe, insbesondere Kegelstirnradgetriebe mit einer oder mehreren Getriebestufen und einem Getriebegehäuse, das die Getriebestufen umschließt und zwei Seitenflächen (16, 17) mit aufgebrachten Kühlrippen (18, 19) sowie eine obere und eine untere Bodenfläche (20, 21) aufweist, die das Getriebegehäuse verschließen, wobei das Stirnradgetriebe mit einer stirnseitig aus dem Getriebegehäuse herausragenden Antriebswelle (5) versehen ist, auf der außerhalb des Getriebegehäuses drehfest ein Axiallüfterrad (29) befestigt ist und wobei mit dem Getriebegehäuse ein mit Öffnungen versehener Laternenflansch (7) zum Anschluss einer Motorlaterne (31) verbunden ist, **dadurch gekennzeichnet, dass** der Laternenflansch (7) an das Getriebegehäuse angeformt ist und mit diesem ein Stück bildet, dass auf den beiden Bodenflächen (20, 21) ebenfalls Kühlrippen (27) aufgebracht sind, dass der Laternenflansch (7) mit seitlichen Öffnungen (23) und mittleren Öffnungen (24) versehen ist, die den Laternenflansch (7) beiderseits einer horizontalen Mittelebene in Längsrichtung des Getriebes durchdringen und dass die mittleren Öffnungen (24) in der Verlängerung der Bodenflächen (20, 21) und die seitlichen Öffnungen (23) in der Verlängerung der Seitenflächen (16, 17) des Getriebegehäuses liegen.

2. Stirnradgetriebe nach Anspruch 1, **dadurch gekennzeichnet, dass** die auf den Seitenflächen (16, 17) des Getriebegehäuses angebrachten Kühlrippen (18, 19) auf die seitlichen Öffnungen (23) im Laternenflansch (7) zulaufen.

3. Stirnradgetriebe nach Anspruch 1 oder 2, **dadurch gekennzeichnet, dass** die obere und die untere Bodenfläche (20, 21) des Getriebegehäuses in Richtung auf die mittigen Öffnungen (24) im Laternenflansch (7) abgeschrägt sind.

4. Stirnradgetriebe nach einem der Ansprüche 1 bis 3, **dadurch gekennzeichnet, dass** zwischen dem Laternenflansch (7) und den Außenflächen des Getriebegehäuses an dessen Frontseite eine Luftleithaube (30) vorgesehen ist, deren Innendurchmesser größer ist als die radial größten Abmessungen der Öffnungen (23, 24) im Laternenflansch (7).

## Claims

1. Spur gear unit, in particular bevel spur gear unit with one or more gear stages and a gear housing which encloses the gear stages and presents two side shells (16, 17) with lateral cooling ribs (18, 19) as well as an upper and a lower bottom shell (20, 21) which close the gear housing, wherein the spur gear unit is provided with a driving shaft (5) which protrudes at the front side from the gear housing and onto which an axial blower wheel (29) is torsion-proof fixed outside the gear housing and wherein a bracket flange (7) provided with openings for the connection of a motor bracket (31) is connected with the gear housing, **characterized in that** the bracket flange (7) is attached to the gear housing and forms a unit with the same, that cooling ribs (27) are also fitted on both bottom shells (20, 21), that the bracket flange (7) is provided with lateral openings (23) and central openings (24) which penetrate the bracket flange (7) on both sides of a horizontal central plane in longitudinal direction of the gear unit, and that the central openings (24) are lying in the extension of the bottom shells (20, 21) and the lateral openings (23) in the extension of the side shells (16, 17) of the gear housing.

2. Spur gear unit according to claim 1, **characterized in that** the cooling ribs (18, 19) fitted on the side shells (16, 17) of the gear housing are running towards the lateral openings (23) in the bracket flange (7).

3. Spur gear unit according to claim 1 or 2, **characterized in that** the upper and the lower bottom shells (20, 21) of the gear housing are beveled towards the central openings (24) in the bracket flange (7).

4. Spur gear unit according to one of claims 1 to 3, **characterized in that**, between the bracket flange (7) and the outside shells of the gear housing, at its front side an air baffle hood (30) is provided whose inside diameter is larger than the radially largest dimensions of the openings (23, 24) in the bracket flange (7).

## Revendications

1. Transmission à engrenage droit, en particulier transmission à engrenage droit à pignons coniques, avec un ou plusieurs étages de transmission et un carter de protection de la transmission qui enferme les étages de transmission, et deux surfaces latérales (16, 17) avec des nervures de refroidissement rapportées (18, 19), ainsi qu'avec une surface de fond supérieure et une surface de fond inférieure (20, 21) qui entourent le carter de protection de la transmission, l'engrenage droit étant pourvu d'un arbre moteur (5), qui fait latéralement saillie hors du carter de protection de la transmission, sur lequel, en dehors du carter de protection de la transmission, est fixée une roue de ventilation axiale (29), solidaire en rotation, et une bride de lanterne (7), pourvue d'ouvertures, étant reliée avec le carter de protection de la transmission, pour le raccordement d'une lanterne de moteur (31), **caractérisée en ce que**
la bride de lanterne (7) est formée à partir du carter de protection de la transmission et forme une seule pièce avec celui-ci, que, sur les deux surfaces de fond (20, 21), sont rapportées également des nervures de refroidissement (27), que la bride de lanterne (7) est pourvue d'ouvertures latérales (23) et d'ouvertures médianes (24), qui traversent la bride de lanterne (7) des deux côtés d'un plan médian horizontal, dans la direction longitudinale de la transmission, et que les ouvertures médianes (24) et les ouvertures latérales (23) sont situées dans le prolongement des surfaces latérales (16, 17) du carter de protection de la transmission.

2. Transmission à engrenage droit selon la revendication 1, **caractérisée en ce que** les nervures de refroidissement rapportées (18, 19), appliquées sur les surfaces latérales (16, 17) du carter de protection de la transmission, s'étendent vers les ouvertures latérales (23) dans la bride de lanterne (7).

3. Transmission à engrenage droit selon revendication 1 ou 2, **caractérisée en ce que** la surface de fond supérieure et la surface de fond inférieure (20, 21) du carter de protection de la transmission sont chanfreinée en direction des ouvertures médianes (24) dans la bride de lanterne (7).

4. Transmission à engrenage droit selon l'une des revendications 1 à 3, **caractérisée en ce que**, entre la bride de lanterne (7) et les surfaces extérieures du carter de la transmission, sur le côté frontal de celui-ci, est prévu un capot de déflecteur d'air (30) dont le diamètre intérieur est plus grand que les dimensions les plus grandes dans le sens radial (23, 24) dans la bride de lanterne (7).
